# EUROPEAN PATENT SPECIFICATION

(11) **EP 0 820 222 B1**
(45) Date of publication and mention of the grant of the patent: **30.08.2000**
(21) Application number: 96906884.0
(22) Date of filing: 09.04.1996
(51) Int. Cl.: A01K 80/00

(54) **APPARATUS FOR CULTIVATING MOLLUSCS**
APPARAT FÜR DIE ZUCHT VON MOLLUSKEN
APPAREIL D'ELEVAGE DE MOLLUSQUES

(30) Priority: 07.04.1995 GB 9507347
(43) Date of publication of application: 28.01.1998
(73) Proprietor: Graham, Robert, Newcastle, County Down BT33 0LX (GB)
(72) Inventor: Graham, Robert, Newcastle, County Down BT33 0LX (GB)
(74) Representative: O'Connell, Maura, Dr.
(86) International application number: IB9600292
(87) International publication number: WO9631117

(56) References cited:
- EP-A- 0 681 783
- GB-A- 2 031 251
- US-A- 4 170 197
- US-A- 4 351 268
- US-A- 4 704 990
- US-A- 5 429 074

## Description

The present invention relates to an apparatus for cultivating molluscs. In particular, the invention relates to an apparatus for cultivating oysters.

US-A-4,704,990 discloses an apparatus for cultivating molluscs, particularly oysters. The apparatus comprises a rotatably supported container and a buoyant member responsive to water level change. US-A-4,704,990 neither discloses nor suggests incorporation of a pivotably mounted lever connected to a buoyancy member nor means to effect rotational movement of the container in response to movement of the buoyancy member and the lever.

According to the invention there is provided an apparatus for cultivating molluscs, the apparatus comprising a rotatable container support in operative association with a container for cultivating molluscs therein; a buoyancy member responsive to water level change; a pivotably mounted lever connected to the buoyancy member; and means to effect rotational movement of the container in response to movement of the buoyancy member and the lever so that, in use, the molluscs tumble in the container.

Preferably, the apparatus comprises a frame including a shaft, the container support being rotatably supported on the shaft and the lever being pivotably mounted on the shaft; and the effecting means comprises means to engage the lever against the container support when the lever moves in the first direction so that, in use, movement of the buoyancy member in the first direction causes pivotable movement of the lever from a rest position in the first direction until the engaging means engages against the container support and further movement of the buoyancy member and the lever in the first direction effects rotational movement of the container support from an initial position in the first direction.

More preferably, the engaging means is a latch means having a drive surface, the latch means being adapted and arranged to engage the drive surface against the container support when the lever moves in the first direction and to permit the lever to return to the rest position when the lever moves in a reverse direction to the first direction.

Even more preferably, the latch means comprises a pivotable member adapted and arranged to pivot in an arc and the container support is provided with at least one projection having a driven surface, the projection being shaped and dimensioned so that, in use, the movement of the lever in the first direction causes the drive surface to engage against the driven surface and effect rotational movement of the container support and movement of the lever in the reverse direction causes pivotable deflection of the pivotable member away from the projection, thereby permitting return of the lever to the rest position.

Advantageously, the latch means comprises a pivotable member in the form of a pawl and a projection in the form of a ratchet having a plurality of circumferentially arranged driven surfaces.

More advantageously, the container support is provided with a plurality of circumferentially arranged projections. Optionally, each projection is substantially wedge-shaped having a driven surface extending at a substantially right angle to the container support and a return surface extending at an acute angle to the container support. Even more advantageously, the lever is provided with return means adapted and arranged to urge the lever to return to the rest position. Still more advantageously, the return means is a counterweight.

Preferably, the apparatus is provided with means for impeding return of the container support to the initial position.

More preferably, the impeding means comprises an impeding member having an impeding surface; and a pivotable member arranged to pivot in an arc; the impeding member and the pivotable member being shaped and dimensioned to permit rotation of the container support in the first direction and to impede rotation of the container support beyond the impeding surface, by engagement of the pivotable member against the impeding surface when the container support rotates in the reverse direction.

Even more preferably, the pivotable member is a pawl and the impeding member is a ratchet having a plurality of circumferentially arranged impeding surfaces.

Advantageously, the ratchet is provided with at least two, preferably four, circumferentially spaced-apart impeding surfaces arranged to prevent reverse rotation of the container support beyond the impeding surface.

More advantageously, the apparatus is provided with a plurality of circumferentially arranged impeding members, each having an impeding surface.

Even more advantageously, the container comprises a plurality of receptacles arranged substantially symmetrically in operative association with the container support about the shaft of the frame. Preferably, the receptacles are rotatably supported in the apparatus.

More preferably, the movement of the buoyancy member is in response to a water level change caused by natural tidal movement. Alternatively, the movement of the buoyancy member is in response to a mechanically generated water level change.

Reference signs have been included in the claims but these reference signs should not be construed as limiting the claims.

Several embodiments of the invention will now be described, by way of example, with reference to the accompanying drawings, in which:
**Figure 1** is a side view of a first embodiment of an apparatus for cultivating molluscs according to the invention;
**Figure 2** is an end view of the apparatus of Figure 1 of the drawings;
**Figure 3** is a plan view of the apparatus of Figure 1 of the drawings;
Figure 4 is a perspective view of a latch means for use in the apparatus of Figure 1 of the drawings;
Figure 5 is a perspective view of a second embodiment of an apparatus for cultivating molluscs according to the invention;
Figure 6 is a perspective view of a third embodiment of an apparatus for cultivating molluscs according to the invention;
Figure 7A is a perspective view of a lever and latch means for use in the apparatus of Figure 6 of the drawings and Figure 7B is an exploded perspective view of the latch means of Figure 7A;
Figure 8 is a sectional view along line VIII to VIII of Figure 7A;
Figure 9 is an exploded perspective view of an end support and lid for a receptacle for use in an apparatus for cultivating molluscs according to the invention; and
Figure 10A is a perspective view of a first alternative impeding means, Figure 10B is longitudinal sectional and perspective views of a second alternative impeding means, Figure 10C is perspective and longitudinal sectional views of a third alternative impeding means and Figure 10D is transverse sectional and perspective views of a fourth alternative impeding means, each of which is suitable for use in an apparatus for cultivating molluscs according to the invention.

In the drawings, similar numerals have been used to indicate like parts.

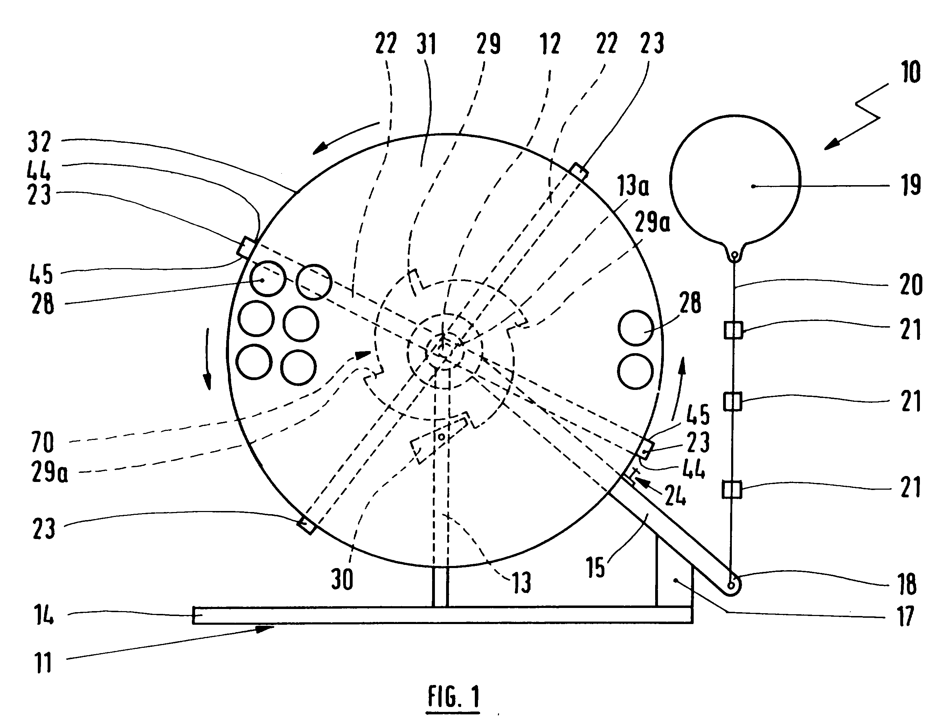

Referring now to Figures 1-4 of the drawings, there is shown a first embodiment of an apparatus for cultivating molluscs generally indicated at 10 according to the invention. The apparatus 10 comprises a container comprising two container supports in the form of substantially circular discs 31 each having a rim 32. The centres of each disc 31 are joined to a shaft 12 by respective hollow disc bosses (not shown), so that each disc 31 and the shaft 12 are in a fixed position relative to one another.

Each container support 31 need not, of course, be round - the container supports 31 may have any desired shape, for example, square, pentagonal, hexagonal or the like. Each container support 31 may be formed from a solid plate or an open mesh-like material. Alternatively, each pair of container supports 31 may form a unitary structure (not shown).

The container also comprises a plurality (for example, fifty) of substantially cylindrical mesh receptacles 28, whose ends are attached to each disc 31. The receptacles 28 are arranged in such a way that the collective weight of the receptacles 28 and their contents (not shown) are evenly distributed around the axis of rotation of each disc 31.

It will be appreciated that the receptacles 28 need not be cylindrical - they may have any desired shape, for example, hexagonal or square in transverse cross-section.

The apparatus 10 also comprises a frame 11 comprising the shaft 12 which is partially encased in a bearing 13a which is supported on a bearing support or pedestal 13 which extends from a substantially rectangular base support frame 14. Thus, the shaft 12/discs 31 can rotate in the bearing 13a about an axis defined by the longitudinal axis of the shaft 12.

Alternatively, the pedestal 13 and bearing 13a may be replaced by a pair of spaced-apart pedestals 13 and bearings 13a (not shown in the first embodiment), arranged on each side of the apparatus 10 and, in that event, the shaft 12 extends across the apparatus 10.

In use, the two discs 31 and the pedestal 13 are provided in parallel substantially vertical planes, while the shaft 12 and the base support frame 14 are provided in parallel substantially horizontal planes.

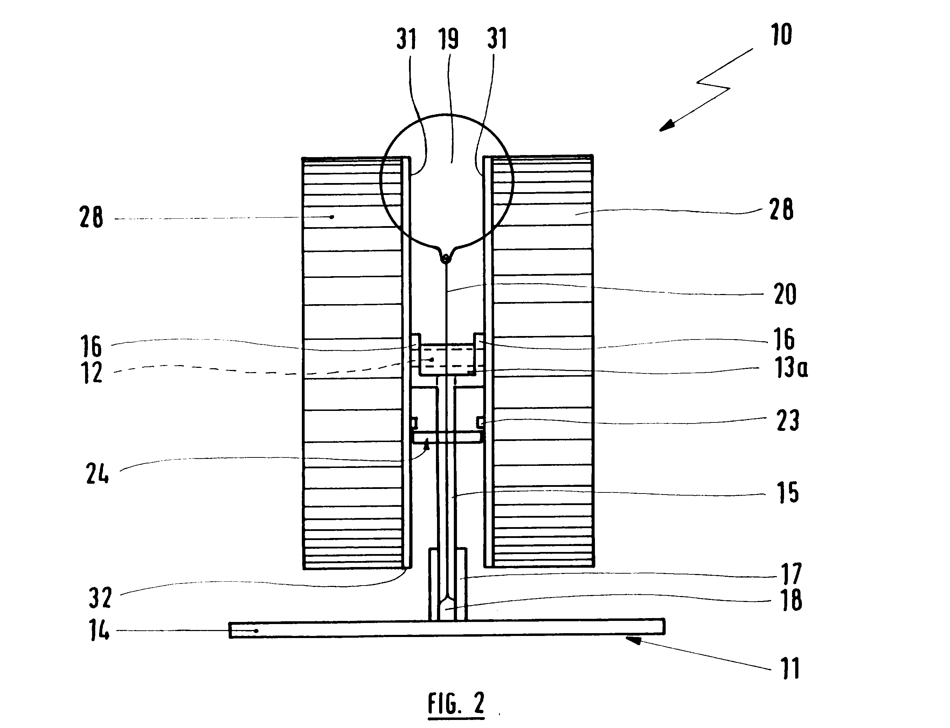

A lever 15 is provided with a forked end 16 enclosing the shaft 12 on either side of the bearing 13a, the forked end 16 being dimensioned such that the lever 15 may pivot about the shaft 12. Thus, the forked end 16 forms the fulcrum of the lever 15. A counterweight 17 is attached adjacent the opposite end 18 of the lever 15. A buoyancy member or float 19 is connected, by means of a flexible member in the form of, for example, a rope or wire 20, to the opposite end 18 of the lever 15. Lesser floats 21 are provided at intervals along the wire 20 between the end 18 of the lever 15 and the float 19 (for clarity, the lesser floats 21 have been omitted from Figure 2 of the accompanying drawings). The lesser floats 21 ensure that the wire 20 remains taut, thereby reducing the likelihood that the wire 20 will become tangled with other components of the apparatus 10 according to the invention.

Alternatively, the float 19 may be pivotably connected by a rigid or semi-rigid member 20 (not shown) to the lever 15 at end 18. The arc of movement of the member 20 is restricted, in order to prevent the float 19 from becoming tangled with other components of the apparatus 10 according to the invention.

Two disc supports 22 are attached to each disc 31. On each disc 31, the disc supports 22 are arranged perpendicular to one another and extend across the diameter of the disc 31 protruding beyond the rim 32 at each end, to form four substantially evenly spaced projections 23 from each disc 31.

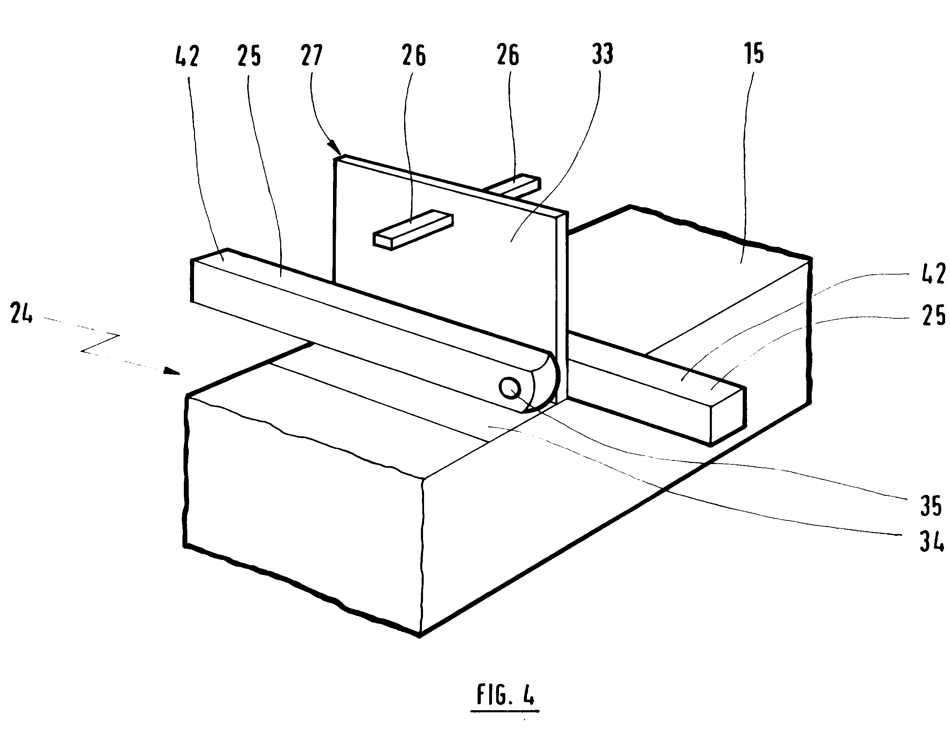

Referring in particular to Figure 4 of the accompanying drawings, there is shown a latch means 24 attached to the lever 15, the latch means 24 comprising two pivotable or elongate members 25, a stop member 26 and a substantially "T"-shaped base member 27. The base member 27 comprises two plates 33, 34 arranged perpendicularly to form an inverted "T"-shape. The elongate members 25 are adjacent the interface between the plates 33, 34, one on either side of the plate 33. Each elongate member 25 is positioned so that one of its ends protrudes laterally beyond the lever 15, in an opposite direction to that of the other elongate member 25. The non-protruding end of each elongate member 25 is attached to the plate 33 by means of a pin 35 (only one visible) about which each of the elongate members 25 can pivot. The stop member 26 extends through the plate 33, spaced-apart from the elongate members 25 and substantially perpendicular thereto. The plate 34 prevents downward pivotable movement of the elongate members 25 and the stop member 26 is positioned such that the elongate members 25 are capable of limited upward pivotable movement in a direction away from the plate 34. In use, the latch means 24 is positioned such that, as the lever 15 moves in a first direction, a drive surface 42 on protruding ends of each of the elongate members 25 engages a respective driven surface 44 of a projection 23 on each of the discs 31 and, as the lever 15 moves in a reverse direction to the first direction, the protruding ends of each of the elongate members 25 momentarily engages a respective return surface 45 of the projection 23 on each of the discs 31 and is deflected upwards towards and against the stop member 26, to permit the lever 15 to move in the reverse direction through the latch means 24 back to the rest position.

It will be appreciated that the latch means 24 may, alternatively, engage the frame supports 22 intermediate the shaft 12 and the rim 32.

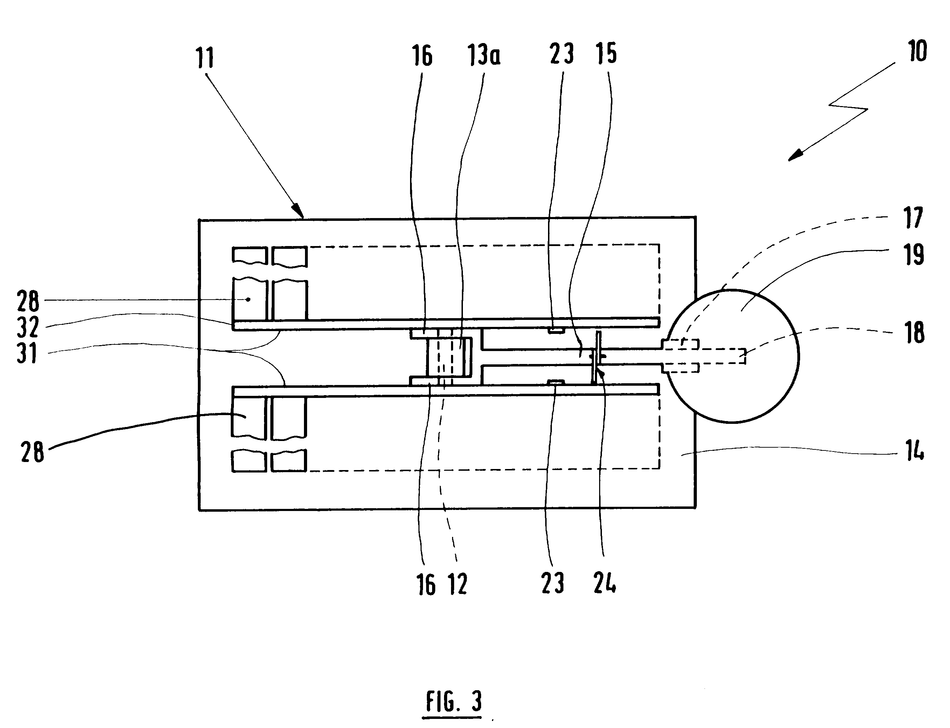

Referring now to Figure 1 of the accompanying drawings there is shown an impeding means 70 in the form of a ratchet and pawl mechanism, comprising an impeding member or ratchet 29 and a pivotable member or pawl 30, which is employed to ensure that the discs 31 rotate in one direction only (counter-clockwise for the embodiment shown in Figure 1). The ratchet 29 is provided with four substantially evenly spaced impeding surfaces or teeth 29a arranged to prevent return of the discs 31 to an initial position when the discs 31 have rotated more than 90°, as will be described in greater detail hereinafter. The ratchet 29 is located about the shaft 12 and is attached to one of the discs 31, such that the ratchet 29/discs 31/shaft 12 rotate about the longitudinal axis formed by the shaft 12. The pawl 30 is pivotably attached to the pedestal 13 and is positioned on the pedestal 13, so that the pawl 30 engages the ratchet 29 in conventional manner. The pawl 30 is provided with resilient means (not shown) arranged to urge the pawl 30 into engagement with the ratchet 29 (the ratchet and pawl mechanism has been omitted from Figures 2 and 3, for the purposes of clarity).

Typically, the base support frame 14 may be 1400 mm in length and 1200 mm in width; each disc 31 may have a diameter of 1200 mm and be separated from the facing disc 31 by 250 mm; the pedestal 13 may be 800 mm in height; the lever 15 may be 1100 mm in length; each individual receptacle 28 may be 150mm in diameter; and the overall height of the apparatus, excluding the float 19/wire 20, may be approximately 1400 mm. For optimum growth, the apparatus 10 according to the invention should be placed in water, which is a minimum of one metre deep at low spring tide. The length of the wire 20 may be varied, depending on the depth of the water in which the apparatus 10 is placed and the seasonal level of the tides. Adjustment of the length of the wire 20 permits alteration of the frequency of rotation of the discs 31, from once a day to two/three times a fortnight, as desired.

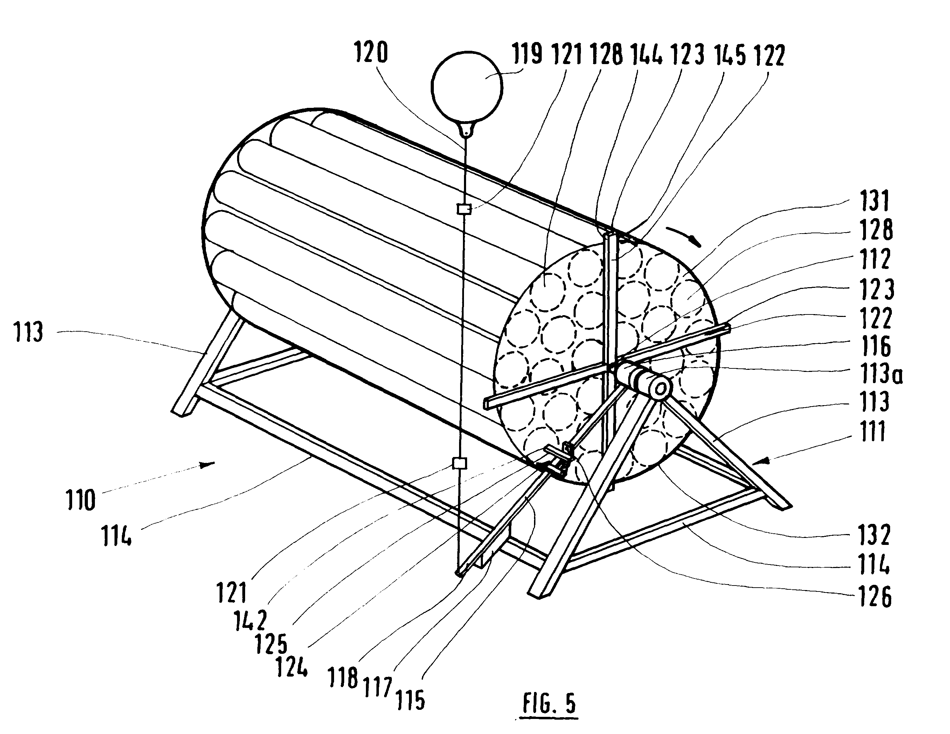

Figure 5 of the drawings shows a second embodiment of an apparatus for cultivating molluscs generally indicated at 110 according to the invention (impeding means omitted for clarity).

The apparatus 110 comprises two substantially circular discs 131 each having a rim 132. The centres of the discs 131 are joined by a shaft 112.

The shaft 112 is, at each end, partially encased in a bearing 113a (only one visible) which is supported on a bearing support 113 extending from a base support frame 114.

A plurality of receptacles 128 are provided, supported between the discs 131, the longitudinal axes of the receptacles 128 being substantially parallel to the shaft 112. A lever 115 has an end 116 enclosing the shaft 112, the lever 115 being capable of pivotable movement about the shaft 112. A counterweight 117 and a float 119 are connected to the lever 115 distal the end 116.

Two disc supports 122 are attached to one disc 131 and a latch means 124 is provided on the lever 115 which can, in use, engage one disc support 122. The latch means 124 includes a single elongate member having a drive surface dimensioned and arranged to engage a driven surface of the disc support 122.

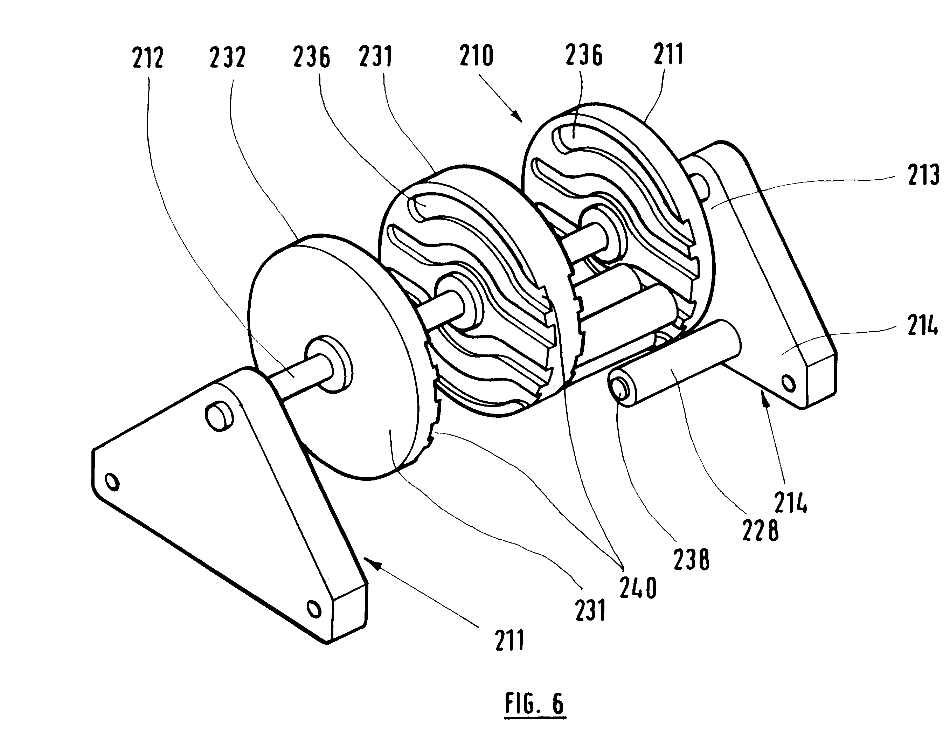

Figures 6-8 of the accompanying drawings show a third embodiment of an apparatus for cultivating molluscs generally indicated as 210 according to the invention. In Figure 6, the lever 215, counterweight 217, buoyancy member 219 and impeding means 270 have been omitted for clarity and the circumferentially arranged projections 223 extending from one disc 231 are not visible.

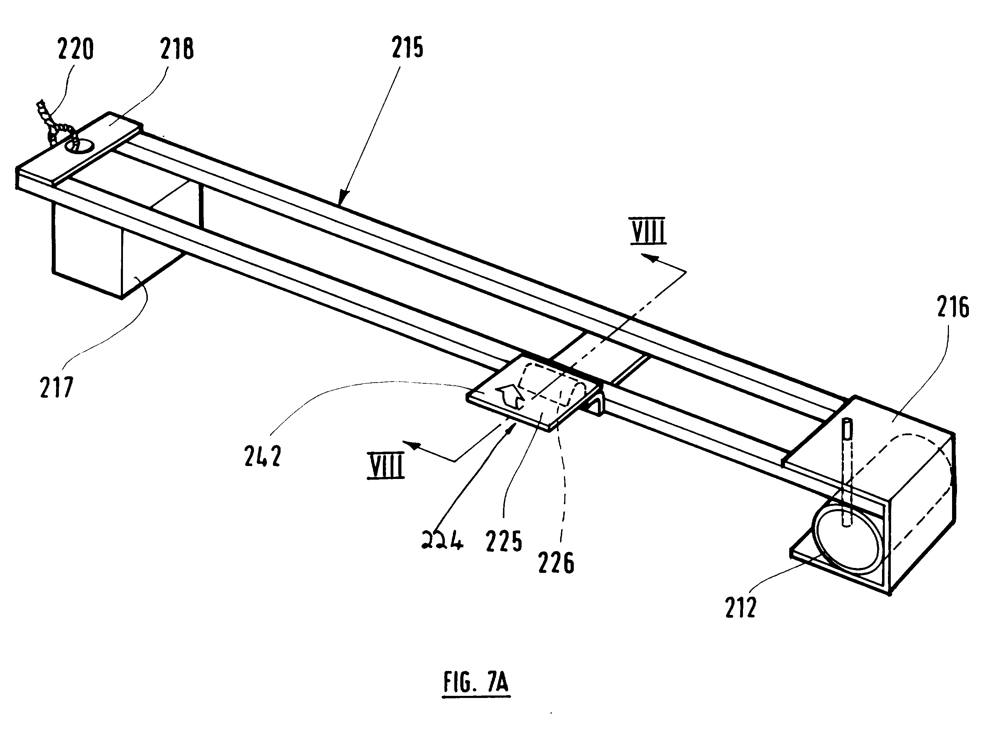

In Figure 7A, the buoyancy member 219 has been omitted for clarity.

The apparatus 210 comprises a frame 211 comprising a shaft 212, which is, at each end, rotatably supported in a unitary bearing support 213/base support 214.

The apparatus 210 also comprises a container including three substantially circular discs 231, the centres of which are fixedly joined to the shaft 212. Alternatively, each disc 231 may be replaced by a substantially square plate (not shown). Facing surfaces of the adjacent discs 231 have channels 236 to receive a plurality of receptacles 228. Each receptacle 228 terminates, at each end, in a boss 238 dimensioned for rotatable movement in the channel 236. The free end 240 of each channel 236 can be reversibly closed off in any conventional manner (not shown). Alternatively, each end of each receptacle 228 could be dimensioned for rotatable movement in the channel 236 (not shown).

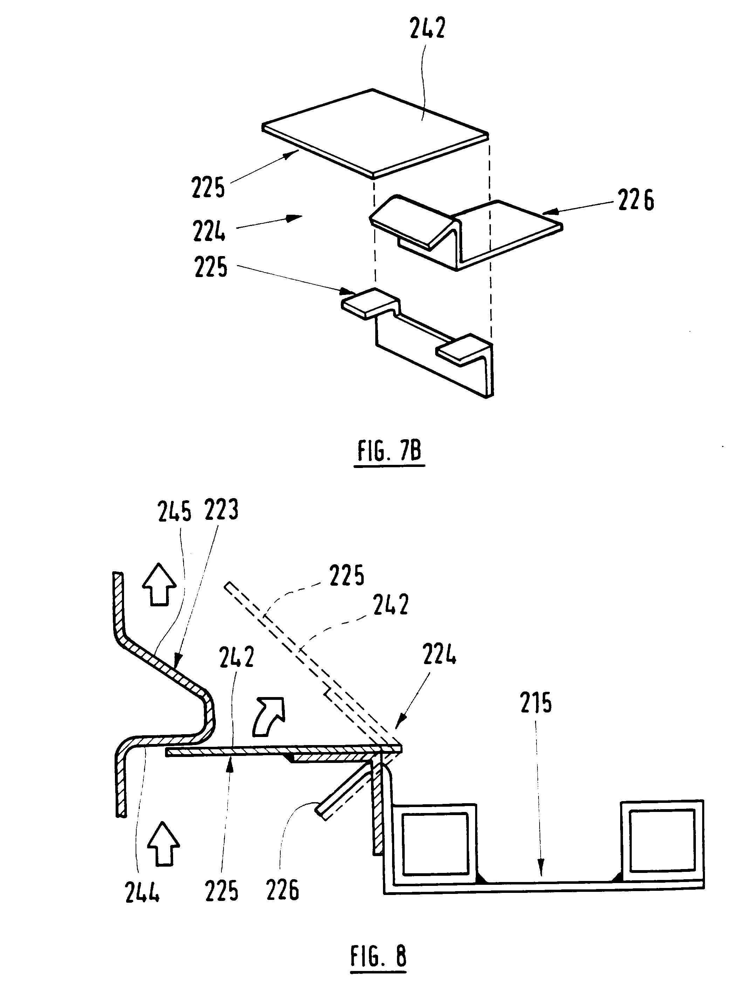

Referring now to Figures 7 and 8, the engaging means comprises a latch means 224 pivotably mounted on the lever 215. The latch means 224 comprises a pivotable member 225 having a drive surface 242 which engages against a driven surface 244 of the projection 223. The pivotable member 225 is pivotable in an arc circumscribed by a stop member 226. In use, as the lever 215 rises, the drive surface 242 contacts the driven surface 244 and causes the container to move in the first direction (indicated by an arrow in Figure 8). As the lever 215 falls, the pivotable member 225 contacts the return surface 245 of the projection 223 and is deflected upwardly (as indicated in dotted outline in Figure 8), so as to allow the lever 215 to pass the projection 223 and return to the rest position.

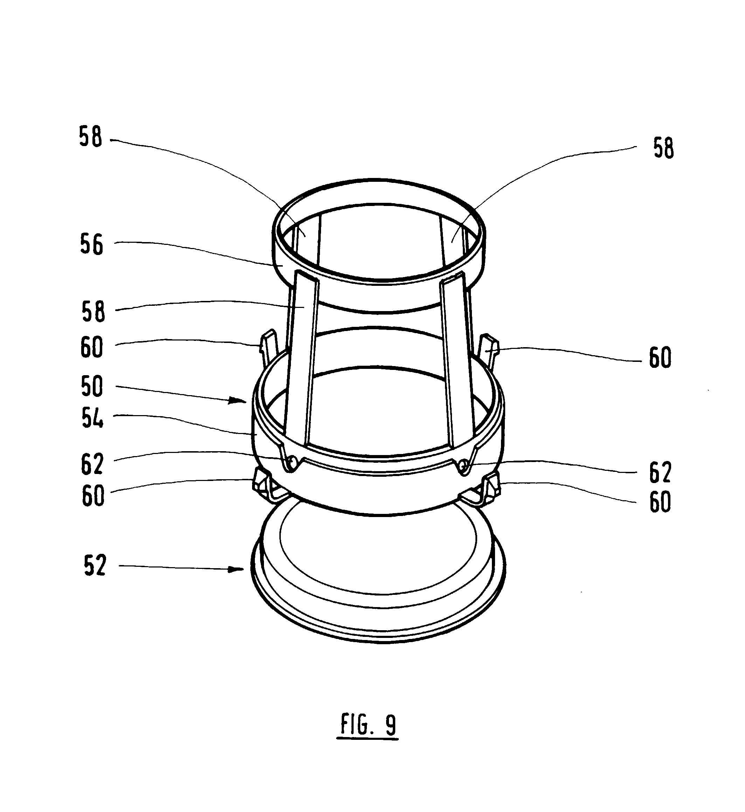

Referring now to Figure 9 of the accompanying drawings, there is illustrated an end support 50 particularly suitable for a receptacle 28 although it will be appreciated that other embodiments are also envisaged. The end support 50 has a detachable lid 52. Each end support 50 comprises a pair of spaced-apart collars 54,56 connected by a plurality of elongate members 58. The end support 50 serves to aid the structural stability of a mesh receptacle 28. Each collar 54 is provided with a plurality of circumferentially arranged lugs 60 and aligned apertures 62, which serve, in use, to reversibly engage the walls of the receptacle 28 with the end support 50. Each lid 52 is adapted for reversible engagement with the apparatus 10, 110, 210 by the provision of, for example, a suitable boss (not visible).

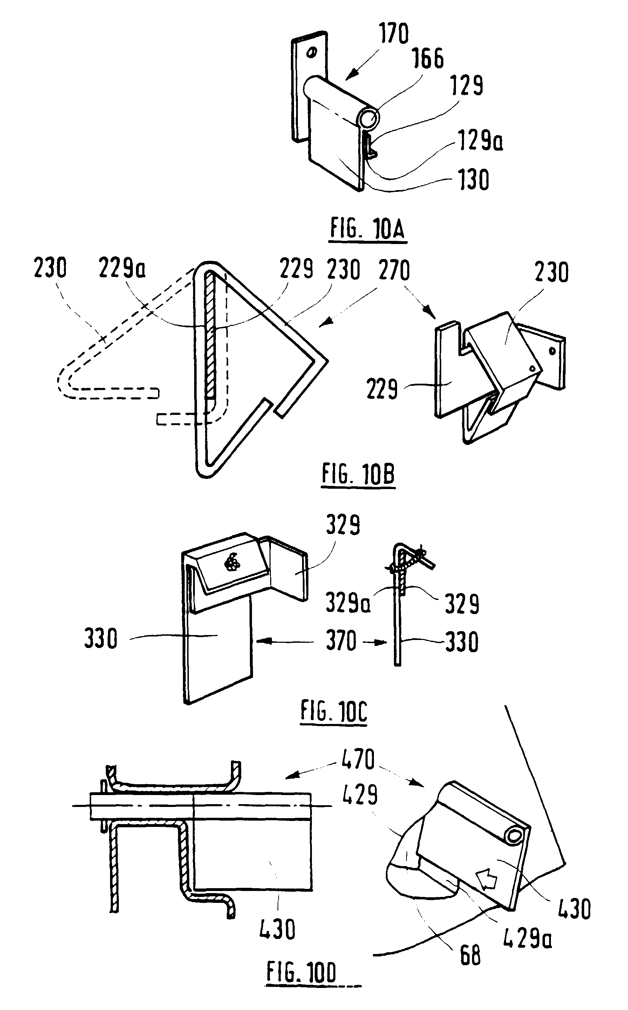

Figure 10 illustrates alternative embodiments of impeding means 70 mountable on the container (not shown in Figures 10A-C).

Figure 10A shows an impeding means 170 comprising a pivotable member 130 and an impeding member 129 having an impeding surface 129a. The pivotable member 130 is pivotable about a bracket 166 in the form of a bar extending from the container and the impeding member 129 extends from the container substantially beneath the bar 166. A stop means (not shown) extends from the frame, the stop means being positioned to contact the pivotable member 130 but not the impeding member 129.

Figure 10B shows an impeding means 270 comprising a pivotable member 230 and an impeding member 129 having an impeding surface 229a. As shown in the longitudinal sectional view, the pivotable member 230 is bent to form an open triangle shown in solid outline in the impeding position, in which the pivotable member 230 is engaged against the impeding surface 229a, and in dotted outline in a position of maximum deflection from the impeding position. In the impeding position, therefore, further pivotable movement of the pivotable member 230 in a counterclockwise direction is prevented, thereby preventing clockwise rotation of the container. Again, a stop means (not shown) extends from the frame, the stop means being positioned to contact the pivotable member 230 but not the impeding member 229.

Figure 10C shows an impeding means 370 comprising a pivotable member 330 and an impeding member 329 having an impeding surface 329a. In the illustrated longitudinal sectional view, the impeding means 370 is shown in solid outline in the impeding position. A stop means (not shown) extends from the frame and is positioned to contact the pivotable member 330 but not the impeding member 329.

Figure 10D shows a partial view of a unitary pedestal/base support frame having a substantially triangular aperture 68. The impeding means 470 comprises a pivotable member 430 and an impeding member 429 having an impeding surface 429a comprising a wall of the aperture 68. The pivotable member 430 is shown in solid outline in the impeding position and can be deflected in the direction of the arrow away from the impeding position. A stop means (not shown) extends from the frame and is positioned to contact the pivotable member 430.

In each of the alternative impeding means illustrated in Figure 10, the impeding means 170, 270, 370, 470 is arranged to permit counterclockwise rotation of the container and to impede clockwise rotation of the container past the last encountered impeding surface 129a, 229a, 329a, 429a, by engagement on a stop means (not shown) extending from the frame 11.

It will be appreciated that the impeding means 70, 170, 270, 370, 470 can, alternatively, be arranged to permit clockwise rotation and to impede counterclockwise rotation of the container, by reversing the action of the respective pivotable member 30, 130, 230, 330, 430.It will also be appreciated that the impeding means 70, 170, 270, 370, 470 can, alternatively, be mounted on the frame 11 and, in that event, the stop means extends from the container.

The materials used to fabricate the components of the apparatus 10, 110, 210 should be non-corrosive in salt water. Various forms of plastics may be suitable, for example.

Typically, the apparatus 10, 110, 210 will be provided with a sufficient number of mesh receptacles 28, 128, 228 to allow a capacity of 200,000 mollusc seed, for example, oyster seed.

In use, the base support frame 14, 114, 124 rests on the sea bed (not shown). Ballast, for example stones, sandbags or steel bars (not shown), may be positioned on or adjacent the base support frame 14, 114, 124 to ensure that a stable base is provided. In the lever 15, 115, 215's rest position, the counterweight 17, 117, 217 rests on the sea bed causing the end 18, 118, 218 of the lever 15, 115, 215 to be adjacent the sea bed. A rising tide raises the float 19, 119, 219 and causes the lever 15, 115, 215 to pivot about the shaft 12, 112, 212. As the end 18, 118, 218 of the lever 15, 115, 215 rises, the drive surface(s) 42 of the pivotable member(s) 25 engage a respective driven surface 44 of the projection 23. (For the Figure 5 and Figures 6-8 embodiments, the pivotable member 125 (not shown), 225 engages a single projection 123, 223). Further upward movement of the float 19, 119, 219 in the rising tide causes the end 18, 118, 218 of the lever 15, 115, 215 to continue to rise which, in turn, causes each disc 31, 131, 231/shaft 12, 112, 212 to rotate in the first direction - either the counter-clockwise direction illustrated in Figure 1 or the clockwise direction illustrated in Figures 5 and 6. During rotation of each disc 31, 131, 231 in the first direction, the impeding means 70 permits rotation in the first direction. As the discs 31, 131, 231 rotate through each 90°, the pivotable member 30, 130, 230 engages a successive impeding surface (for example, a tooth 29a), the arrangement of the impeding surface being such as to permit rotation of the discs 31, 131, 231 in the first direction and to prevent reverse rotation beyond the most recently encountered impeding surface 29a, when the discs 31, 131, 231 have rotated more than 90°.

As the tide begins to fall, the float 19, 119, 219 also falls. The counterweight 17, 117, 217 then causes the end 18, 118, 218 of the lever 15, 115, 215 to pivot back down towards its rest position. The downwards movement of the end 18, 118, 218 of the lever 15, 115, 215 is not retarded by the projections 23, 123, 223 since the pivotable member(s) 25, 125, 225, upon engagement against the return surface(s) 45, 145, 245 of the projection(s) 23, 123, 213, are deflected away from the projection(s) 23, 123, 213. Thus, the pivotable member(s) 25, 125, 225 will only momentarily engage the projection(s) 23, 123, 213 so that the lever 15, 115, 215 passes through the latch means 24, 124, 224 in the reverse direction back to the rest position.

Providing the discs 31, 131, 231 have been rotated through at least 90° before the tide falls, the impeding means 70, for example, the ratchet and pawl mechanism 29, 30 of the first embodiment, ensures that the discs 31, 131, 231 remain displaced by 90° from their initial position. Typically, therefore, on each tidal cycle, each disc 31, 131, 231 may be rotated through 90° with each successive rotation being in the same direction on each successive tidal cycle. This results in uniform mollusc growth rate, by providing uniform mollusc access to nutrients, and in uniform shell shape, by removing growth frills.

The apparatus 10, 110, 210 according to the invention may be used above the low water mark and is, preferably, for use in water which is at least one metre deep at low spring tide and has particular application in water having an optimum depth of 15m. It will be appreciated that cultivation of molluscs in water of this depth has not, to date, been practicable because of difficulties of access, in order to rotate the molluscs.

Accordingly, the invention has particular application in those countries where suitable shallow water sites for the traditional cultivation methods are already in use, by facilitating regular rotation of molluscs in deeper water than has heretofore been possible.

The provision of a plurality of receptacles 28, 128, 228 extending between each pair of discs 31, 131, 231 permits more efficient mollusc cultivation per surface area of sea bed than the use of a single cylinder occupying the same surface area of sea bed, bearing in mind that, for optimum growth rate, the molluscs are arranged either in the receptacles 28, 128, 228 or in a single cylinder (not shown) at an optimum depth of 10cm. The arrangement of the plurality of receptacles 28, 128, 218 substantially symmetrically about the axis of rotation of each disc 31, 131, 231 facilitates rotational movement in response to moving water.

It will be appreciated that the provision of a lever 15, 115, 215 pivotable about a fulcrum comprising the shaft 12, 112, 212, the lever 15, 115, 215 having a float 19,119, 219 mounted on the lever 15, 115, 215 distal the fulcrum, facilitates sensitive conversion of movement of the float 19, 119, 219 into rotational movement of the discs 31, 131, 231, the effort required to achieve rotation being that necessary to overcome the mass of the lever 15, 115, 215/counterweight 17, 117, 217 and the friction between the bearing 13a, 113a, 213a and the shaft 12, 112, 212.

It will also be appreciated that adjustment of the length of the wire 20, 120, 220 to accommodate tidal variation, prescribes the vertical movement of the float 19, 119, 219 and, therefore, the upward movement of the lever 15, 115, 215 which, in turn, limits the angular rotation of the discs 31, 131, 231/receptacles 28, 128, 228.

It will further be appreciated that the provision of an impeding means 70, for example a ratchet and pawl arrangement 29, 30 permits rotational movement of the receptacles 28, 128, 228 in controlled increments of, for example, 90° in a first direction. This facilitates the mollusc tumbling action necessary for efficient mollusc growth.

## Claims

1. An apparatus (10; 110; 210) for cultivating molluscs, the apparatus (10; 110, 210) comprising a rotatable container support (31; 131; 231) in operative association with a container (28; 128; 228) for cultivating molluscs therein; a buoyancy member (19; 119; 219) responsive to water level change; a pivotably mounted lever (15; 115; 215) connected to the buoyancy member (19; 119; 219) and means (24; 124; 224) to effect rotational movement of the container (28; 128; 228) in response to movement of the buoyancy member (19; 119; 219) and the lever (15; 115; 215) so that, in use, the molluscs tumble in the container (28, 128; 228).

2. An apparatus (10; 110; 210) according to Claim 1, in which the apparatus (10; 110; 210) comprises a frame (11; 111; 211) including a shaft (12; 112; 212), the container support (31; 131; 231) being rotatably supported on the shaft (12; 112; 212) and the lever (15; 115; 215) being pivotably mounted on the shaft (12; 112; 212); and the effecting means (24; 124; 224) comprises means to engage the lever (15; 115; 215) against the container support (31; 131; 231) when the lever (15; 115; 215) moves in a first direction so that, in use, movement of the buoyancy member (19; 119; 219) in the first direction causes pivotable movement of the lever (15; 115; 215) from a rest position in the first direction until the engaging means (24; 124; 224) engages against the container support (31; 131; 231) and further movement of the buoyancy member (19; 119; 219) and the lever (15; 115; 215) in the first direction effects rotational movement of the container support (31; 131; 231) from an initial position in the first direction.

3. An apparatus (10; 110; 210) according to Claim 2, in which the engaging means (24; 124; 224) is a latch means having a drive surface (42; 142; 242), the latch means being adapted and arranged to engage the drive surface (42; 142; 242) against the container support (31; 131; 231) when the lever (15; 115; 215) moves in the first direction and to permit the lever (15; 115; 215) to return to the rest position when the lever (15; 115; 215) moves in a reverse direction to the first direction.

4. An apparatus (10; 110; 210) according to Claim 3, in which the latch means (24; 124; 224) comprises a pivotable member (25; 125; 225) adapted and arranged to pivot in an arc and the container support (31; 131; 231) is provided with at least one projection (23; 123; 223) having a driven surface (44; 144; 244), the projection (23; 123; 223) being shaped and dimensioned so that, in use, the movement of the lever (15; 115; 215) in the first direction causes the drive surface (42; 142; 242) to engage against the driven surface (44; 144; 244) and effect rotational movement of the container support (31; 131; 231) and movement of the lever (15; 115; 215) in the reverse direction causes pivotable deflection of the pivotable member (25; 125; 225) away from the projection (23; 123; 223), thereby permitting return of the lever (15; 115; 215) to the rest position.

5. An apparatus (10; 110; 210) according to Claim 4, in which the latch means ( 24; 124; 224) comprises a pivotable member (25; 125; 225) in the form of a pawl and a projection (23; 123; 223) in the form of a ratchet having a plurality of circumferentially arranged driven surfaces (44; 144; 244).

6. An apparatus (10; 110; 210) according to Claim 4, in which the container support ( 31; 131; 231) is provided with a plurality of circumferentially arranged projections (23; 123; 223).

7. An apparatus (10; 110; 210) according to Claim 6 in which each projection (223) is substantially wedge-shaped having a driven surface (244) extending at a substantially right angle to the container support (231) and a return surface (245) extending at an acute angle to the container support (231).

8. An apparatus (10; 110; 210) according to any one of the preceding claims, in which the lever (15; 115; 215) is provided with return means (17; 117; 217) adapted and arranged to urge the lever (15; 115; 215) to return to the rest position.

9. An apparatus (10; 110; 210) according to Claim 8, in which the return means (17; 117; 217) is a counterweight.

10. An apparatus (10; 110; 210) according to any one of the preceding claims, in which the apparatus (10; 110; 210) is provided with means (70; 170; 270; 370; 470) for impeding return of the container support (31; 131; 231) to the initial position.

11. An apparatus (10; 110; 210) according to Claim 10, in which the impeding means (70; 170; 270; 370; 470) comprises an impeding member (29; 129; 229; 329; 429) having an impeding surface (29a; 129a; 229a; 329a; 429a) and a pivotable member (30; 130; 230; 330; 430) arranged to pivot in an arc; the impeding member (29; 129; 229; 329; 429) and the pivotable member (30; 130; 230; 330; 430) being shaped and dimensioned to permit rotation of the container support (31; 131; 231) in the first direction and to impede rotation of the container support (31; 131; 231) beyond the impeding surface (29a; 129a; 229a; 329a; 429a), by engagement of the pivotable member (30; 130; 230; 330; 430) against the impeding surface (29a; 129a; 229a; 329; 429a) when the container support (31; 131; 231) rotates in the reverse direction.

12. An apparatus (10; 110; 210) according to Claim 11, in which the pivotable member (30; 130; 230; 330; 430) is a pawl and the impeding member (29; 129; 229; 329; 429) is a ratchet having a plurality of circumferentially arranged impeding surfaces (29a; 129a; 229a; 329a; 429a).

13. An apparatus (10; 110; 210) according to Claim 12, in which the ratchet (29; 129; 229; 329; 429) is provided with at least two, preferably four, circumferentially spaced-apart impeding surfaces (29a; 129a; 229a; 329a; 429a), arranged to prevent reverse rotation of the container support (31; 131; 231) beyond the impeding surface (29a; 129a; 229a; 329a; 429a).

14. An apparatus (10; 110; 210) according to Claim 11, in which the apparatus (10; 110; 210) is provided with a plurality of circumferentially arranged impeding members (29; 129; 229; 329; 429), each having an impeding surface (29a; 129a; 229a; 329a; 429a).

15. An apparatus (10; 110; 210) according to any one of Claims 2-14, in which the container (28; 128; 228) comprises a plurality of receptacles arranged substantially symmetrically in operative association with the container support (31; 131; 231) about the shaft (12; 112; 212) of the frame (11; 111; 211).

16. An apparatus (10; 110; 210) according to Claim 15, in which the receptacles (28; 128; 228) are rotatably supported in the apparatus (10; 110; 210).

17. An apparatus (10; 110; 210) according to any one of the preceding claims, in which the movement of the buoyancy member (19; 119; 219) is in response to a water level change caused by natural tidal movement.

18. An apparatus (10; 110; 210) according to any one of Claims 1-16, in which the movement of the buoyancy member (19; 119; 219) is in response to a mechanically generated water level change.

## Patentansprüche

1. Vorrichtung (10; 110; 210) zum Züchten von Weichtieren, wobei die Vorrichtung (10; 110; 210) einen drehbaren Behälterträger (31; 131; 231) in betrieblicher Verknüpfung mit einem Behälter (28; 128; 228) zum Züchten von Weichtieren darin; einen Schwimmkörper (19; 119; 219), der auf Wasserstandsänderung reagiert; einen schwenkbar angebrachten Hebel (15; 115; 215), der mit dem Schwimmkörper (19; 119; 219) verbunden ist, und Mittel (24; 124; 224) zum Bewirken von Drehbewegung des Behälters (28; 128; 228) als Reaktion auf Bewegung des Schwimmkörpers (19; 119; 219) und des Hebels (15; 115; 215) aufweist, so daß, in Verwendung, die Weichtiere in dem Behälter (28; 128; 228) taumeln.

2. Vorrichtung (10; 110; 210) nach Anspruch 1, bei der die Vorrichtung (10; 110; 210) einen eine Welle (12; 112; 212) umfassenden Rahmen (11; 111; 211) aufweist, wobei der Behälterträger (31; 131; 231) drehbar an der Welle (12; 112; 212) gehalten wird und der Hebel (15; 115; 215) schwenkbar an der Welle (12; 112; 212) angebracht ist; und das Einwirkungsmittel (24; 124; 224) Mittel zum Einklinken des Hebels (15; 115; 215) gegen den Behälterträger (31; 131; 231) aufweist, wenn der Hebel (15; 115; 215) sich in eine erste Richtung bewegt, so daß, in Verwendung, Bewegung des Schwimmkörpers (19; 119; 219) in die erste Richtung eine Schwenkbewegung des Hebels (15; 115; 215) aus einer Ruheposition in die erste Richtung, bis das Einklinkmittel (24; 124; 224) gegen den Behälterträger (31; 131; 231) einklinkt, und weitere Bewegung des Schwimmkörpers (19; 119; 219) und des Hebels (15; 115; 215) in die erste Richtung eine Drehbewegung des Behälterträgers (31; 131; 231) aus einer Ausgangsposition in die erste Richtung verursacht.

3. Vorrichtung (10; 110; 210) nach Anspruch 2, bei der das Einklinkmittel (24; 124; 224) ein Klinkenmittel mit einer Antriebsfläche (42; 142; 242) darstellt, wobei das Klinkenmittel ausgeführt und angeordnet ist, um die Antriebsfläche (42, 142; 242) gegen den Behälterträger (31; 131; 231) einzuklinken, wenn der Hebel (15; 115; 215) sich in die erste Richtung bewegt, und um dem Hebel (15; 115; 215) zu ermöglichen, in die Ruheposition zurückzukehren, wenn der Hebel (15; 115; 215) sich in eine zu der ersten Richtung umgekehrte Richtung bewegt.

4. Vorrichtung (10; 110; 210) nach Anspruch 3, bei der das Klinkenmittel (24; 124; 224) ein schwenkbares Element (25; 125; 225) aufweist, das ausgeführt und angeordnet ist, um in einem Bogen zu schwenken, und der Behälterträger (31; 131; 231) mit wenigstens einem Vorsprung (23; 123; 223) versehen ist, der eine getriebene Oberfläche (44; 144; 244) aufweist, wobei der Vorsprung (23; 123; 223) eine solche Form und solche Abmessungen aufweist, daß, in Verwendung, die Bewegung des Hebels (15; 115; 215) in die erste Richtung die Antriebsfläche (42; 142; 242) veranlaßt, gegen die getriebene Fläche (44; 144; 244) einzuklinken, und Drehbewegung des Behälterträgers (31; 131; 231) und Bewegung des Hebels (15; 115; 215) in die umgekehrte Richtung schwenkbare Ablenkung des Schwenkelements (25; 125; 225) von dem Vorsprung (23; 123; 223) weg verursacht, wodurch Rückführung des Hebels (15; 115; 215) in die Ruheposition ermöglicht wird.

5. Vorrichtung (10; 110; 210) nach Anspruch 4, bei der das Klinkenmittel (24; 124; 224) ein schwenkbares Element (25; 125; 225) in Form einer Sperrklinke und einen Vorsprung (23; 123; 223) in Form einer Ratsche mit einer Vielzahl am Umfang angeordneter getriebener Oberflächen (44; 144; 244) aufweist.

6. Vorrichtung (10; 110; 210) nach Anspruch 4, bei der der Behälterträger (31; 131; 231) mit einer Vielzahl am Umfang angeordneter Vorsprünge (23; 123; 223) versehen ist.

7. Vorrichtung (10; 110; 210) nach Anspruch 6, bei der jeder Vorsprung (223) im wesentlichen keilförmig ist und eine sich bei einem im wesentlichen rechten Winkel zu dem Behälterträger (231) erstreckende, getriebene Oberfläche (244) und eine Rückführungsoberfläche (245) aufweist, die sich bei einem spitzen Winkel zu dem Behälterträger (231) erstreckt.

8. Vorrichtung (10; 110; 210) nach einem der vorhergehenden Ansprüche, bei der der Hebel (15; 115; 215) mit so ausgeführten und angeordneten Rückführungsmitteln (17; 117; 217) versehen ist, um den Hebel (15; 115; 215) zur Rückkehr in die Ruheposition zu drängen.

9. Vorrichtung (10; 110; 210) nach Anspruch 8, bei der das Rückführungsmittel (17; 117; 217) ein Gegengewicht ist.

10. Vorrichtung (10; 110; 210) nach einem der vorhergehenden Ansprüche, bei dem die Vorrichtung (10; 110; 210) mit Mitteln (70; 170; 270; 370; 470) zum Behindern der Rückführung des Behälterträgers (31; 131; 231) in die Ausgangsposition versehen ist.

11. Vorrichtung (10; 110; 210) nach Anspruch 10, bei der das Behinderungsmittel (70; 170; 270; 370; 470) ein Behinderungselement (29; 129; 229; 329; 429) mit einer Behinderungsoberfläche (29a; 129a; 229a; 329a; 429a) und ein schwenkbares Element (30; 130; 230; 330; 430) aufweist, das zum Schwenken in einem Bogen eingerichtet ist; wobei das Behinderungselement (29; 129; 229; 329; 429) und das schwenkbare Element (30; 130; 230; 330; 430) so geformt sind und solche Abmessungen haben, um Drehung des Behälterträgers (31; 131; 231) in die erste Richtung zuzulassen und Drehung des Behälterträgers (31; 131; 231) über die Behinderungsoberfläche (29a; 129a; 229a; 329a; 429a) hinaus durch Einklinken des schwenkbaren Elements (30; 130; 230; 330; 430) gegen die Behinderungsoberfläche (29a; 129a; 229a; 329a; 429a) zu behindern, wenn der Behälterträger (31; 131; 231) sich in die umgekehrte Richtung dreht.

12. Vorrichtung (10; 110; 210) nach Anspruch 11, bei der das schwenkbare Element (30; 130; 230; 330; 430) eine Sperrklinke und das Behinderungselement (29; 129; 229; 329; 429) eine Ratsche mit einer Vielzahl am Umfang angeordneter Behinderungsoberflächen (29a; 129a; 229a; 329a; 429a) darstellt.

13. Vorrichtung (10; 110; 210) nach Anspruch 12, bei der die Ratsche (29; 129; 229; 329; 429) mit wenigstens zwei, vorzugsweise vier am Umfang beanstandeten Behinderungsoberflächen (29a; 129a; 229a; 329a; 429a) versehen ist, die zum Verhindern von umgekehrter Drehung des Behälterträgers (31; 131; 231) über die Behinderungsoberfläche (29a; 129a; 229a; 329a; 429a) hinaus angeordnet sind.

14. Vorrichtung (10; 110; 210) nach Anspruch 11, bei der die Vorrichtung (10; 110; 210) mit einer Vielzahl am Umfang angeordneter Behinderungselemente (29; 129; 229; 329; 429) versehen ist, die jeweils eine Behinderungsoberfläche (29a; 129a; 229a; 329a; 429a) aufweisen.

15. Vorrichtung (10; 110; 210) nach einem der Ansprüche 2-14, bei der der Behälter (28; 128; 228) eine Vielzahl von Aufnahmegefäßen aufweist, die im wesentlichen symmetrisch in betrieblicher Verknüpfung mit dem Behälterträger (31; 131; 231) um die Welle (12; 112; 212) des Rahmens (11; 111; 211) herum angeordnet sind.

16. Vorrichtung (10; 110; 210) nach Anspruch 15, bei der die Aufnahmegefäße (28; 128; 228) drehbar in der Vorrichtung (10; 110; 210) gehalten werden.

17. Vorrichtung (10; 110; 210) nach einem der vorhergehenden Ansprüche, bei der die Bewegung des Schwimmkörpers (19; 119; 219) als Reaktion auf durch natürliche Gezeitenbewegung verursachte Wasserstandsänderung erfolgt.

18. Vorrichtung (10; 110; 210) nach einem der Ansprüche 1-6, bei der die Bewegung des Schwimmkörpers (19; 119; 219) als Reaktion auf mechanisch erzeugte Wasserstandsänderung erfolgt.

## Revendications

1. Dispositif (10 ; 110 ; 210) pour cultiver des mollusques, le dispositif (10 ; 110, 210) comprenant un support de récipient rotatif (31 ; 131 ; 231) en association opérationnelle avec un récipient (28 ; 128 ; 228) pour cultiver des mollusques à l'intérieur ; un élément flottant (19 ; 119 ; 219) sensible à un changement de niveau d'eau ; un levier monté de manière pivotante (15 ; 115 ; 215) connecté à l'élément flottant (19 ; 119 ; 219) et un moyen (24 ; 124 ; 224) en vue d'exécuter un déplacement rotationnel du récipient (28 ; 128 ; 228) en réponse à un déplacement de l'élément flottant (19 ; 119 ; 219) et du levier (15 ; 115 ; 215) de telle sorte qu'en cours d'utilisation les mollusques culbutent dans le récipient (28, 128 ; 228).

2. Dispositif (10 ; 110 ; 210) selon la revendication 1, dans lequel le dispositif (10 ; 110 ; 210) comprend un cadre (11 ; 111 ; 211) comportant un axe (12 ; 112 ; 212), le support de récipient (31 ; 131 ; 231) étant supporté de manière rotative sur l'axe (12 ; 112 ; 212) et le levier (15 ; 115 ; 215) étant monté de manière pivotante sur l'axe (12 ; 112 ; 212) ; et le moyen d'exécution (24 ; 124 ; 224) comprend un moyen pour engager le levier (15 ; 115 ; 215) contre le support de récipient (31 ; 131 ; 231) quand le levier (15 ; 115 ; 215) se déplace dans un premier sens de telle sorte qu'en cours d'utilisation le déplacement de l'élément flottant (19 ; 119 ; 219) dans le premier sens entraîne un déplacement pivotant du levier (15 ; 115 ; 215) depuis une position de repos dans le premier sens jusqu'à ce que le moyen d'engagement (24 ; 124 ; 224) s'engage contre le support de récipient (31 ; 131 ; 231) et qu'un autre déplacement de l'élément flottant (19 ; 119 ; 219) et du levier (15 ; 115 ; 215) dans le premier sens exécute un déplacement rotationnel du support de récipient (31 ; 131 ; 231) depuis une position initiale dans le premier sens.

3. Dispositif (10 ; 110 ; 210) selon la revendication 2, dans lequel le moyen d'engagement (24 ; 124 ; 224) est un moyen de verrou ayant une surface d'entraînement (42 ; 142 ; 242), le moyen de verrou étant adapté et disposé pour engager la surface d'entraînement (42 ; 142 ; 242) contre le support de récipient (31 ; 131 ; 231) quand le levier (15 ; 115 ; 215) se déplace dans le premier sens et en vue de permettre au levier (15, 115, 215) de revenir à la position de repos quand le levier (15 ; 115 ; 215) se déplace dans un sens inverse au premier sens.

4. Dispositif (10 ; 110 ; 210) selon la revendication 3, dans lequel le moyen de verrou (24 ; 124 ; 224) comprend un élément pivotant (25 ; 125 ; 225) adapté et disposé en vue de pivoter selon un arc et le support de récipient (31 ; 131 ; 231) est muni d'au moins une saillie (23 ; 123 ; 223) ayant une surface entraînée (44 ; 144 ; 244), la saillie (23 ; 123 ; 223) étant conformée et dimensionnée de telle sorte qu'en cours d'utilisation le déplacement du levier (15 ; 115 ; 215) dans le premier sens force la surface d'entraînement (42 ; 142 ; 242) à s'engager contre la surface entraînée (44 ; 144 ; 244) et à effectuer un déplacement rotationnel du support de récipient (31 ; 131 ; 231) et le déplacement du levier (15 ; 115 ; 215) dans le sens inverse entraîne une déviation pivotante de l'élément pivotant (25 ; 125 ; 225) à l'écart de la saillie (23 ; 123 ; 223), permettant ainsi le retour du levier (15 ; 115 ; 215) à la position de repos.

5. Dispositif (10 ; 110 ; 210) selon la revendication 4, dans lequel le moyen de verrou (24 ; 124 ; 224) comprend un élément pivotant (25 ; 125 ; 225) en forme de cliquet et une saillie (23 ; 123 ; 223) en forme de rochet ayant une pluralité de surfaces entraînées disposées circonférentiellement (44 ; 144 ; 244).

6. Dispositif (10 ; 110 ; 210) selon la revendication 4, dans lequel le support de récipient (31 ; 131 ; 231) est muni d'une pluralité de saillies disposées circonférentiellement (23 ; 123 ; 223).

7. Dispositif (10 ; 110 ; 210) selon la revendication 6, dans lequel chaque saillie (223) a sensiblement une forme de coin ayant une surface entraînée (244) s'étendant à un angle sensiblement droit par rapport au support de récipient (231) et une surface de renvoi (245) s'étendant à un angle aigu par rapport au support de récipient (231).

8. Dispositif (10 ; 110 ; 210) selon l'une quelconque des revendications précédentes, dans lequel le levier (15 ; 115 ; 215) est muni d'un moyen de renvoi (17 ; 117 ; 217) adapté et disposé en vue de forcer le levier (15 ; 115 ; 215) à revenir à la position de repos.

9. Dispositif (10 ; 110 ; 210) selon la revendication 8, dans lequel le moyen de retour (17 ; 117 ; 217) est un contrepoids.

10. Dispositif (10 ; 110 ; 210) selon l'une quelconque des revendications précédentes, dans lequel le dispositif (10 ; 110 ; 210) est muni d'un moyen (70 ; 170 ; 270 ; 370 ; 470) pour empêcher le retour du support de récipient (31 ; 131 ; 231) à la position initiale.

11. Dispositif (10 ; 110 ; 210) selon la revendication 10, dans lequel le moyen d'empêchement (70 ; 170 ; 270 ; 370 ; 470) comprend un élément d'empêchement (29 ; 129 ; 229 ; 329 ; 429) ayant une surface d'empêchement (29a, 129a, 229a, 329a, 429a) et un élément pivotant (30 ; 130 ; 230 ; 330 ; 430) disposé en vue de pivoter selon un arc ; l'élément d'empêchement (29, 129, 229, 329, 429) et l'élément pivotant (30 ; 130 ; 230 ; 330 ; 430) étant conformés et dimensionnés en vue de permettre la rotation du support de récipient (31 ; 131 ; 231) dans le premier sens et d'empêcher la rotation du support de récipient (31 ; 131 ; 231) au-delà de la surface d'empêchement (29a ; 129a ; 229a ; 329a ; 429a), par engagement de l'élément pivotant (30 ; 130 ; 230 ; 330 ; 430) conte la surface d'empêchement (29a ; 129a ; 229a ; 329 ; 429a) quand le support de récipient (31 ; 131 ; 231) tourne dans le sens inverse.

12. Dispositif (10 ; 110 ; 210) selon la revendication 11, dans lequel l'élément pivotant (30 ; 130 ; 230 ; 330 ; 430) est un cliquet et l'élément d'empêchement (29 ; 129 ; 229 ; 329 ; 429) est un rochet ayant une pluralité de surfaces d'empêchement disposées circonférentiellement (29a ; 129a ; 229a ; 329a ; 429a).

13. Dispositif (10 ; 110 ; 210) selon la revendication 12, dans lequel le rochet (29 ; 129 ; 229 ; 329 ; 429) est muni d'au moins deux, de préférence quatre, surfaces d'empêchement espacées circonférentiellement (29a ; 129a ; 229a ; 329a ; 429a), disposées en vue d'empêcher la rotation inverse du support de récipient (31 ; 131 ; 231) au-delà de la surface d'empêchement (29a ; 129a ; 229a ; 329a ; 429a).

14. Dispositif (10 ; 110 ; 210) selon la revendication 11, dans lequel le dispositif (10 ; 110 ; 210) est muni d'une pluralité d'éléments d'empêchement disposés circonférentiellement (29 ; 129 ; 229 ; 329 ; 429) , chacun ayant une surface d'empêchement (29a ; 129a ; 229a ; 329a ; 429a).

15. Dispositif (10 ; 110 ; 210) selon l'une quelconque des revendications 2 à 14, dans lequel le récipient (28 ; 128 ; 228) comprend une pluralité de réceptacles disposés sensiblement symétriquement en association opérationnelle avec le support de récipient (31 ; 131 ; 231) autour de l'axe (12 ; 112 ; 212) du cadre (11 ; 111 ; 211).

16. Dispositif (10 ; 110 ; 210) selon la revendication 15, dans lequel les réceptacles (28 ; 128 ; 228) sont supportés de manière rotative dans le dispositif (10 ; 110 ; 210).

17. Dispositif (10 ; 110 ; 210) selon l'une quelconque des revendications précédentes, dans lequel le déplacement de l'élément flottant (19 ; 119 ; 219) est en réponse à un changement de niveau d'eau causé par un mouvement naturel de marée.

18. Dispositif (10 ; 110 ; 210) selon l'une quelconque des revendications 1 à 16, dans lequel le déplacement de l'élément flottant (19 ; 119 ; 219) est en réponse à un changement de niveau d'eau généré mécaniquement.
